Europäisches Patentamt

European Patent Office

Office européen des brevets

(11) Publication number: **0 294 100 B1**

(12) **EUROPEAN PATENT SPECIFICATION**

(45) Date of publication of patent specification: **29.07.92** (51) Int. Cl.5: **C01B 21/16**

(21) Application number: **88304773.0**

(22) Date of filing: **26.05.88**

(54) **A process for producing a purified hydrazine hydrate.**

(30) Priority: **28.05.87 JP 129773/87**

(43) Date of publication of application:
**07.12.88 Bulletin 88/49**

(45) Publication of the grant of the patent:
**29.07.92 Bulletin 92/31**

(84) Designated Contracting States:
**DE FR GB**

(56) References cited:
**FR-A- 1 517 080**
**US-A- 3 740 436**

**PATENT ABSTRACTS OF JAPAN, vol. 5, no. 124 (C-66)[796], 11th August 1981; & JP-A-56 59 744 and JP-A-56 597 45 (OTSUKA KAGAKU YAKUHIN K.K.) 23-05-1981**

(73) Proprietor: **MITSUBISHI GAS CHEMICAL COM-PANY, INC.**
**5-2, Marunouchi 2-chome Chiyoda-Ku**
**Tokyo, 100(JP)**

(72) Inventor: **Kuriyama, Yasuhisa**
**9-16, Sasakawa**
**Yokkaichi-shi Mie-ken(JP)**
Inventor: **Sakaguchi, Shuuzabu**
**19-5, Nishi 1-chome**
**Toride-shi Ibaragi-ken(JP)**
Inventor: **Kohzaki, Toshiaki**
**2689-20 Kashiwada Ushiku-cho**
**Inashiki-gun Ibaragi-ken(JP)**
Inventor: **Nito, Syoichi**
**13-5, 3-chome Mitakidai**
**Yokkaichi-shi Mie-ken(JP)**

(74) Representative: **Myerscough, Philip Boyd et al**
**J.A.Kemp & Co. 14, South Square Gray's Inn**
**London, WC1R 5EU(GB)**

## Description

This invention relates to a process for producing a purified hydrazine hydrate by reducing the TOC (total organic carbon) concentration in hydrazine hydrate produced from ketazine.

Hydrazine is used in boiler cleaning agents, foaming agents, agricultural chemicals, pharmaceuticals and industrial chemicals, and a high TOC concentration in hydrazine is not desirable in some cases, such as in use as a material for pharmaceuticals or foaming agents which require strict accuracy.

The process for synthesis of hydrazine from ketazine, in general, comprises oxidizing ammonia with an oxidizing agent such as sodium hypochlorite or hydrogen peroxide in the presence of ketone to produce ketazine, hydrolyzing the ketazine to produce hydrazine hydrate and further purifying the hydrazine hydrate by distillation. The TOC constituents in the final product of hydrazine hydrate depend upon what oxidizing agent and ketone are used to produce ketazine and what process is used for hydrolysis of the ketazine to obtain hydrazine. Usually, hydrazine purified by distillation has a TOC concentration of 500 to 1,500 ppm if no special purification procedure is taken.

At the step for producing ketazine by using an oxidizing agent, ketone and ammonia, it is difficult to obtain completely pure ketazine. Condensation products of ketone with ammonia and their oxidized compounds are always formed as impurities. Major part of these impurities is removed by distillation. However, some impurities, which behave similarly to ketazine, are difficult to remove. Thus, the resultant hydrazine hydrate has a high TOC concentration.

Hydrazine hydrate obtained by hydrolysis of ketazine contains substances formed from impurities contained in ketazine, by-products formed from ketazine during its hydrolysis, unreacted ketazine and hydrazone which is a hydrolysis intermediate.

Distillation, concentration or rectification of hydrazine hydrate obtained by hydrolysis of ketazine can give hydrazine hydrate in which the major part of the impurities is removed.

However, there are a diversity of impurities. The volatilities of the impurities relative to hydrazine also vary from small relative volatilities to large ones. There are some impurities having relative volatilities very close to that of hydrazine, and these impurities cannot be removed without an ultra-accuracy distillation being carried out at the sacrifice of economy. It is difficult to remove these impurities to a low level by ordinary distillation procedures.

Therefore, hydrazine hydrate obtained by such ordinary distillation procedures usually contains 500 to 1,500 ppm of TOC derived from these impurities.

Examples of the above-mentioned impurities are, in addition to unreacted materials and reaction intermediates such as ketazine, hydrazone and diazacyclopropane, alcohol, ketoalcohol, unsaturated ketone, condensation product of ketone, condensation product of ketone with ammonia and reaction products of these compounds with hydrazine. The above impurities are, for example, various alcohols, ketones, amines, amides, oximes, hydrazine compounds such as hydrazides and azine derivatives, and heterocyclic compounds such as pyrazine, pyrazole, pyrazoline, pyrrol, pyridine, pyridazine, triazole and imidazole. Thus, the impurities vary in wide range.

In order to remove the above impurities in hydrazine hydrate, steps to take can be, in general, distillation, liquid-liquid extraction or adsorption.

As previously mentioned, however, there is a limitation to an ordinary procedure of the removal by distillation, and a resultant hydrazine hydrate has a TOC concentration of 500 to 1,500 ppm.

Liquid-liquid extraction method is effective to some extent. Since, however, some impurities have low distribution coefficient and cannot be extracted completely. Therefore, this method has an economical limitation of up to 300 to 600 ppm TOC contents.

There can also be means of adsorption. For example, the use of activated carbon can remove impurities comparatively easily to about 300 ppm of TOC constituents concentration. However, the activated carbon has defects that the presence of a large amount of impurities requires frequent reactivation thereof, which thus results in extreme consumption of the activated carbon; an activated carbon usually brings about decomposition of hydrazine hydrate, thus causing a large loss of hydrazine hydrate; or foaming takes place at the time of adsorption operation, thus the operation being difficult. A synthetic adsorbent does not decompose hydrazine and gives a similar adsorption effect to that of the activated carbon. However, the synthetic adsorbent is expensive and similarly requires frequent reactivation thereof when an amount for the treatment is large. Therefore, economy imposes a limitation of up to about 300 ppm on the removal by the synthetic adsorbent.

FR-A-1517080 relates to the production of hydrazine hydrate by adding an aliphatic saturated hydrocarbon to a mixed solution containing hydrazine hydrate and a salt, subjecting the resulting mixture to azeotropic distillation, and recovering hydrazine hydrate from the lower phase of the resulting distillate after it has separated into two phases.

This invention provides a process for producing a purified hydrazine hydrate, which comprises (a) concentrating an aqueous solution of impure hydrazine hydrate by distilling out water and a major part of the total organic carbon in the presence of at least one salt selected from chloride, sulfate, phosphate and carbonate and (b) recovering purified hydrazine hydrate containing not more than 300 ppm of total organic carbon from the concentrated solution from step (a) by distilling out purified hydrazine hydrate.

The hydrazine hydrate to be purified in this invention is in the state of an aqueous solution of impure hydrazine hydrate such as obtained by reacting ammonia with an oxidizing agent in the presence of ketone to produce ketazine and hydrolyzing the ketazine, or an aqueous solution of hydrazine hydrate purified by distilling the obtained aqueous solution of hydrazine hydrate.

The process of this invention comprises two steps. The first step comprises adding an aqueous solution of chloride, sulphate, phosphate or carbonate to an aqueous solution of impure hydrazine hydrate and distilling the mixture to distil water out and distill a major part of TOC constituents out together with th water. The second step comprises distilling the bottom product of the first step from which the major part of TOC constituents has been distilled off to obtain a hydrazine hydrate having a low TOC content and at the same time, recover concentrated salts. The recovered salts can be recycled in the two steps.

For convenience, the first step is referred to as "concentration-distillation step" and the second step as "hydrazine hydrate distillation step" hereinbelow.

Preferably used in the concentration-distillation step are salts which do not change the structure of hydrazine hydrate by reaction but have high solubility. Such salts are chlorides, sulphates, phosphates and carbonates. Examples of the chlorides include lithium chloride, sodium chloride, potassium chloride, magnesium chloride, calcium chloride, barium chloride, strontium chloride, ammonium chloride and hydrazinium monochloride. Examples of the sulphates include sodium sulphate, potassium sulphate, magnesium sulphate, ammonium sulphate and dihydrazinium sulphate. Examples of the phosphates include sodium phosphate, potassium phosphate and hydrazinium phosphate. And examples of the carbonates include sodium carbonate and potassium carbonate. Among these, the sulphates are more preferably used, and especially, dihydrazinium sulphate is preferably used.

The higher the concentration of these salts goes in the system, the easier the separation of hydrazine from TOC constituents is. This tendency is scarcely affected by a change in the water concentration in the system.

However, there are some exceptions to the above tendency. Separation of some of the TOC constituents, e.g. amide compounds (to be referred to as "low volatile substances") is not made much easier by increasing the concentration of the salt. And yet, the water concentration has an influence on the separation, and the higher the water concentration is, the easier the separation is.

Therefore, a major part of TOC constituents can be removed by mixing a hydrazine hydrate and a salt and subjecting the mixture to a distillation procedure to distill off the TOC constituents together with water. However, in the case of decreasing the TOC concentration further, it is necessary to distill the low volatile substances out. In this case, an aqueous solution of hydrazine hydrate and a liquid containing the salt are fed separately from each other. An aqueous solution of the salt is fed to an upper stage of a distillation column and an aqueous solution of hydrazine hydrate is fed to a stage lower than the stage to which the aqueous solution of the salt is fed. Namely, a liquid containing the salt is fed to the vicinity of the top of a distillation column where the concentration of hydrazine hydrate is low. Preferably, the salt is fed to a zone of the distillation column where the concentration of hydrazine hydrate is reduced to not more than 35 %. At the vicinity of this zone, it is easy to separate the low volatile substances.

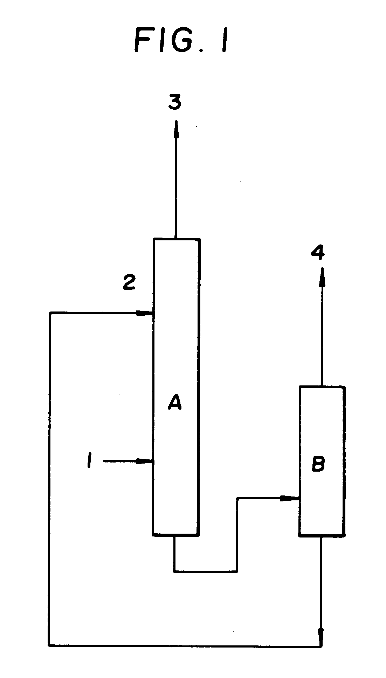

Figure 1 is a flow chart showing one of the preferred embodiments of this invention in which a liquid containing the salt is fed to the vicinity of a distillation column top. In Figure 1, A indicates a concentration-distillation step, B indicates a hydrazine hydrate distillation step, 1 indicates an aqueous solution of hydrazine hydrate to be fed, 2 indicates an aqueous solution of hydrazine hydrate containing the salt, 3 indicates water (containing TOC constituents) and 4 indicates the purified aqueous solution of hydrazine hydrate.

The conditions for the concentration-distillation step are as follows.

As the salt concentration in the system increases, it becomes easier to separate TOC constituents from hydrazine hydrate. Hence, it is desirable to use the salt in as large a concentration as possible. Preferably, it is adjusted such that the salt concentration in the bottom product is not less than 10 %, especially not less than 15 %. When the salt concentration is over the above lower limit, most part of TOC constituents is distilled off together with water.

The higher concentration of hydrazine hydrate to be fed is economically desirable. Although, even the lower concentration thereof does not make much difference. It is preferable to carry the distillation out at pressure not higher than the vicinity of atmospheric pressure when taking account of the stability of hydrazine hydrate.

In the hydrazine hydrate distillation step, the bottom product obtained in the above step having reduced TOC constituents is subjected to distillation to distil out hydrazine hydrate. However, most part of TOC constituents is already removed in the concentration-distillation step. Therefore, the object of the distillation step here is to separate from one another. the salt, hydrazine hydrate and impurities having higher boiling points than that of hydrazine hydrate

In this distillation step, it is desirable to recycle the bottom product, i.e. a liquid containing the salt to the concentration-distillation step. Preferably, the salt concentration in the bottom product is as high as possible such that the TOC constituents can be easily removed. It is preferable that the maximum concentration of the salt is the same as its concentration in the solubility thereof at a temperature of the liquid. When an amount of the salt exceeds the solubility, crystals are deposited and the viscosity of the liquid is made very high, thus the operational difficulty being caused.

The distillation may be carried out under elevated pressure or reduced pressure. It is, however, preferable to carry it out at pressure not higher than the vicinity of atmospheric pressure.

This invention can be carried out in both batch method and continuous method. When this invention is industrially carried out, the continuous method is preferable from the view point of operationability. In the batch method, it is naturally possible to carry out the two steps by using the same apparatus.

Dihydrazinium sulfate and hydrazinium monochloride, may be prepared in situ.

In the case when the salt is recycled between the two steps, the accumulation of TOC constituents and other impurities in the salt is scarecely observed if an aqueous solution of hydrazine hydrate purified by distillation is used. However, if an aqueous solution of hydrazine hydrate obtained by mere hydrolysis is used, the accumulation of high boiling points-having impurities in the salt is observed since the high boiling points-having impurities are contained in the above aqueous solution of hydrazine hydrate. Therefore, when the salt is recycled, the salt is to be little by little replaced by a fresh salt or the impurities accumulated in the salt are to be removed by some method (e.g. extraction or filtration) depending upon the amount of the accumulated impurities.

According to this invention, it is possible to reduce the TOC concentration in hydrazine hydrate produced from ketazine to a very low concentration.

The following Examples will explain this invention more in detail.

The TOC concentrations in the Examples were measured by the following method.

A sample to be measured was diluted by the distilled water such that the concentration of the hydrazine hydrate in the sample was not higher than 50 ppm. Then, 10 $\mu$l of the diluted sample was injected to an analyzer of total organic carbon (produced by Shimazu Seisakusho Co., Ltd. TOC-500 type) by microsyringe and the TOC concentration was measured.

The calibration curve was prepared in advance by using a potassium hydrogen phthalate as standard sample. The concentration of the TOC was calculated based on the calibration curve by using the above concentration of the TOC. The TOC concentrations are expressed as that of the undiluted measuring sample.

In the examples and comparative examples, "%" stands for "% by weight".

Example 1

A 60 % aqueous solution of hydrazine hydrate having 630 ppm of TOC, which was obtained by a process of oxidizing ammonia with hydrogen peroxide in the presence of methylethyl ketone and distilling the resulting product, was fed at 60 g/hr to the 10th stage from the bottom in an Oldershaw type distillation column having 40 stages in the concentration-distillation step. On the other hand, a solution of 4% water, 16% hydrazine hydrate and 80 % dihydrazinium sulphate was fed to the 10th stage (having 20 % hydrazine hydrate) from the top at 40 g/hr.

At atmospheric pressure, water was distilled out of the top at 8.6 kg/hr, and the resultant bottom product (having 35 % the salt) was subjected to simple distillation at reduced pressure of 20 kPa (150 torr) in the hydrazine hydrate distillation step to give 70 % hydrazine hydrate containing 52 ppm of TOC at 51.4 g/hr. The aqueous solution of hydrazine hydrate and dihydrazinium sulphate obtained as a bottom product was recycled 10 times. Accumulated impurities were hardly observed.

Example 2

A 100 % hydrazine hydrate having 720 ppm of TOC, which was obtained by a process of oxidizing ammonia with sodium hypochlorite in the presence of methylethyl ketone and distilling the resulting product, was treated in the same apparatus that was used in Example 1.

In the concentration-distillation step, the hydrazine hydrate was fed to the 5th stage from the bottom at 40 g/hr together with water at 10 g/hr. At the same time, a solution of 10 % hydrazine hydrate and 90 % dihydrazinium sulfate was fed to 10th stage (having 4 % hydrazine hydrate) from the top at 10 g/hr.

At atmospheric pressure, water was distilled out of the top at 10 g/hr, and the resultant bottom product (having 18 % the salt) was subjected to simple distillation at reduced pressure of 9.3 kPa (70 torr) in the hydrazine hydrate distillation step to give 100% hydrazine hydrate containing 90 ppm of TOC at 40 g/hr. The solution of dihydrazinium sulphate obtained as a bottom product was recycled 6 times. Accumulated impurities were hardly observed.

Example 3

A 100 % hydrazine hydrate having 870 ppm of TOC, which was obtained by a process of oxidizing ammonia with hydrogen peroxide in the presence of methylethyl ketone and distilling the resulting product, was treated in the same apparatus that was used in Example 1.

In the concentration-distillation step, the hydrazine hydrate was fed to the 5th stage from the bottom at 40 g/hr together with water at 10 g/hr. At the same time, a solution of 20 % hydrazine hydrate and 80 % dihydrazinium sulphate was fed to the 10th stage (having 32 % hydrazine hydrate) from the top at 70 g/hr.

At atmospheric pressure, water was distilled out of the top at 10 g/hr, and the resultant bottom product (having 51 % the salt) was subjected to simple distillation at reduced pressure of 9.3 kPa (70 torr) in the hydrazine hydrate distillation step to give 100 % hydrazine hydrate containing 65 ppm of TOC at 40 g/hr. The solution of hydrazine hydrate and dihydrazinium sulphate obtained as a bottom product was recycled 5 times. Accumulated impurities were hardly observed.

Example 4

A 44 % aqueous solution of hydrazine hydrate having 3500 ppm of TOC, which was obtained by a process of oxidizing ammonia with hydrogen peroxide in the presence of methylethyl ketone, was treated in the same apparatus that was used in Example 1.

In the concentration-distillation step, the aqueous solution of the hydrazine hydrate was fed to the 15th stage from the bottom at 97 g/hr. At the same, a solution of 4% water, 22 % hydrazine hydrate and 74 % dihydrazinium sulphate was fed to the 10th stage (having 25 % hydrazine hydrate) from the top at 223 g/hr.

At atmospheric pressure, water was distilled out of the top at 46.2 g/hr, and the resultant bottom product (having 60 % concentration of the salt) was subjected to simple distillation at reduced pressure of 9.3 kPa (70 torr) in the hydrazine hydrate distillation step to give 84 % hydrazine hydrate containing 230 ppm of TOC at 50.8 g/hr. The solution of hydrazine hydrate and dihydrazinium sulphate obtained as a bottom product was recycled 10 times. The accummulation of impurities reached 2.5 %, however, the lowering of the effect was hardly observed.

Example 5

A 60 % aqueous solution of hydrazine hydrate having 630 ppm of TOC, which was obtained by a process of oxidizing ammonia with hydrogen peroxide in the presence of methylethyl ketone and distilling the resulting product, was treated in the same apparatus that was used in Example 1.

In the concentration-distillation step, the aqueous solution of the hydrazine hydrate was fed to the 15th stage from the bottom at 60 g/hr. At the same time, a solution of 15% water, 67 % hydrazine hydrate and 18 % sodium chloride was fed to the 10th stage (having 32 % hydrazine hydrate) from the top at 83 g/hr.

At atmospheric pressure, water was distilled out of the top at 15 g/hr, and the resultant bottom product (having 12 % the salt) was subjected to simple distillation at reduced pressure of 20 kPa (150 torr) in the hydrazine hydrate distillation step to give 80 % hydrazine hydrate containing 180 ppm of TOC at 45 g/hr.

Example 6

A 48 % aqueous solution of hydrazine hydrate having 500 ppm of TOC, which was obtained by a process of oxidizing ammonia with hydrogen peroxide in the presence of methylethyl ketone and distilling the resulting product, was treated in the same apparatus that was used in Example 1.

In the concentration-distillation step, the aqueous solution of the hydrazine hydrate was fed to the 15th stage from the bottom at 66.5 g/hr at 10 g/hr. At the same time, a solution of 2.4% water, 9.8% hydrazine hydrate and 87.8% hydrazinium monophosphate was fed to the 10th stage (having 4.5 % hydrazine hydrate) from the top at 38.5 g/hr.

At atmospheric pressure, water was distilled out of the top at 26.5 g/hr, and the resultant bottom product (having 32 % the salt) was subjected to simple distillation at reduced pressure of 20 kPa (150 torr) in the hydrazine hydrate distillation step to give 80 % hydrazine hydrate containing 115 ppm of TOC at 40 g/hr.

Example 7

A 40 % aqueous solution of hydrazine hydrate having 580 ppm of TOC, which was obtained by a process of oxidizing ammonia with hydrogen peroxide in the presence of methylethyl ketone and distilling the resulting product, was treated in the same apparatus that was used in Example 1.

In the concentration-distillation step, the aqueous solution of the hydrazine hydrate was fed to the 15th stage from the bottom at 90 g/hr. At the same time, a solution of 17% water, 63 % hydrazine hydrate and 20 % potassium carbonate was fed to the 10th stage (having 27 % hydrazine hydrate) from the top at 120 g/hr.

At atmospheric pressure, water was distilled out of the top at 30 g/hr, and the resultant bottom product (having 13 % the salt) was subjected to simple distillation at reduced pressure of 20 kPa (150 torr) in the hydrazine hydrate distillation step to give 60 % hydrazine hydrate containing 205 ppm of TOC at 60 g/hr.

Comparative Example 1

In the concentration-distillation step, a 40 % aqueous solution of hydrazine hydrate having 3,200 ppm of TOC, which was obtained by a process of oxidizing ammonia with hydrogen peroxide in the presence of methylethyl ketone, was fed at 90 g/hr to 15th stage from the bottom of the same apparatus as in Example 1.

At atmospheric pressure, water was distilled out of the top to concentrate the hydrazine hydrate to 96 %. In the hydrazine hydrate distillation step, the above concentrated hyrazine hydrate was subjected to simple distillation at reduced pressure of 9.3 kPa (70 torr) to give 96 % hydrazine hydrate containing 620 ppm of TOC at 37.5 g/hr.

Comparative Example 2

In the concentration-distillation step, a 60 % aqueous solution of hydrazine hydrate having 630 ppm of TOC, which was obtained by a process of oxidizing ammonia with hydrogen peroxide in the presence of methylethyl ketone, was fed at 60 g/hr to 15th stage from the bottom of the same apparatus as in Example 1.

At atmospheric pressure, water was distilled out of the top to concentrate the hydrazine hydrate to 100 %. In the hydrazine hydrate distillation step, the above concentrated hyrazine hydrate was subjected to simple distillation at reduced pressure of 9.3 kPa (70 torr) to give 100 % hydrazine hydrate containing 670 ppm of TOC at 36 g/hr.

## Claims

1. A process for producing a purified hydrazine hydrate, which comprises (a) concentrating an aqueous solution of impure hydrazine hydrate by distilling out water and a major part of the total organic carbon in the presence of at least one salt selected from chloride, sulfate, phosphate and carbonate and (b) recovering purified hydrazine hydrate containing not more than 300 ppm of total organic carbon from the concentrated solution from step (a) by distilling out purified hydrazine hydrate.

2. A process according to claim 1 wherein the aqueous solution of impure hydrazine hydrate has been obtained by hydrolysis of ketazine.

3. A process according to claim 2 wherein the ketazine has been obtained by oxidation of ammonia with an oxidizing agent in the presence of a ketone.

4. A process according to claim 2 wherein the aqueous solution of impure hydrazine hydrate has been obtained by a pre-purification of an aqueous solution of more impure hydrazine hydrate by distillation.

5. A process according to any one of the preceding claims wherein the chloride is lithium chloride, sodium chloride, potassium chloride, magnesium chloride, calcium chloride, barium chloride, strontium chloride, ammonium chloride or hydrazinium monochloride.

6. A process according to any one of claims 1 to 4 wherein the sulfate is sodium sulfate, potassium sulfate, magnesium sulfate, ammonium sulfate or dihydrazinium sulfate.

7. A process according to any one of claims 1 to 4 wherein the phosphate is sodium phosphate, potassium phosphate or hydrazinium phosphate.

8. A process according to any one of claims 1 to 4 wherein the carbonate is sodium carbonate or potassium carbonate.

9. A process according to any one of the preceding claims wherein a solution of the said salt is fed to an upper stage of a distillation column and an aqueous solution of impure hydrazine hydrate is fed to a stage lower than the stage to which the solution of the salt is fed.

10. A process according to claim 9 wherein the solution of the salt is an aqueous solution.

11. A process according to any one of the preceding claims wherein an aqueous solution of the salt is fed to a stage of distillation column at which the concentration of hydrazine hydrate is not more than 35%.

12. A process according to any one of the preceding claims wherein the salt concentration in a bottom product is not lower than 10%.

13. A process according to any one of the preceding claims wherein the bottom product obtained in the separation step (b) is re-used in the concentration step (a).

**Revendications**

1. Procédé de production d'hydrate d'hydrazinium purifié, qui comporte (a) le fait de concentrer une solution aqueuse d'hydrate d'hydrazinium impur en chassant par distillation l'eau et une majeure partie du carbone organique total, en présence d'au moins un sel choisi parmi les chlorures, sulfates, phosphates et carbonates, et (b) la récupération d'un hydrate d'hydrazinium purifié, ne contenant pas plus de 300 ppm de carbone organique total, à partir de la solution concentrée provenant de l'étape (a), par distillation de l'hydrate d'hydrazinium purifié.

2. Procédé conforme à la revendication 1, dans lequel la solution d'hydrate d'hydrazinium impur a été obtenue par hydrolyse d'une cétazine.

3. Procédé conforme à la revendication 2, dans lequel la cétazine a été obtenue par oxydation d'ammoniac avec un agent oxydant, en présence d'une cétone.

4. Procédé conforme à la revendication 2, dans lequel la solution aqueuse d'hydrate d'hydrazinium impur a été obtenue par prépurification, par distillation, d'une solution aqueuse d'hydrate d'hydrazinium plus impur.

5. Procédé conforme à l'une quelconque des revendications précédentes, dans lequel le chlorure utilisé est du chlorure de lithium, du chlorure de sodium, du chlorure de potassium, du chlorure de magnésium, du chlorure de calcium, du chlorure de baryum, du chlorure de strontium, du chlorure d'ammonium ou du monochlorure d'hydrazinium.

6. Procédé conforme à l'une quelconque des revendications 1 à 4, dans lequel le sulfate utilisé est du sulfate de sodium, du sulfate de potassium, du sulfate de magnésium, du sulfate d'ammonium ou du sulfate de dihydrazinium.

7. Procédé conforme à l'une quelconque des revendications 1 à 4, dans lequel le phosphate utilisé est du phosphate de sodium, du phosphate de potassium ou du phosphate d'hydrazinium.

8. Procédé conforme à l'une quelconque des revendications 1 à 4, dans lequel le carbonate utilisé est du carbonate de sodium ou du carbonate de potassium.

9. Procédé conforme à l'une quelconque des revendications précédentes, dans lequel on envoie une solution dudit sel vers un étage supérieur d'une colonne de distillation et on envoie une solution aqueuse d'hydrate d'hydrazinium impur vers un étage inférieur à celui vers lequel on envoie la solution de sel.

10. Procédé conforme à la revendication 9, dans lequel la solution de sel est une solution aqueuse.

11. Procédé conforme à l'une quelconque des revendications précédentes, dans lequel on envoie une solution aqueuse du sel utilisé vers un étage de la colonne de distillation au niveau duquel la concentration d'hydrate d'hydrazinium ne dépasse pas 35%.

12. Procédé conforme à l'une quelconque des revendications précédentes, dans lequel la concentration de sel dans le produit de fond de colonne n'est pas inférieure à 10%.

13. Procédé conforme à l'une quelconque des revendications précédentes, dans lequel le produit de fond de colonne, obtenu dans l'étape (b), est réutilisé dans l'étape de concentration (a).

**Patentansprüche**

1. Verfahren zur Herstellung eines gereinigten Hydrazinhydrats, umfassend (a) Einengen einer wäßrigen Lösung von unreinem Hydrazinhydrat durch Abdestillieren von Wasser und eines großen Teils des gesamten organischen Kohlenstoffs (der gesamten organischen Kohlenstoff enthaltenden Verbindungen) in Gegenwart von mindestens einem Salz, ausgewählt aus dem Chlorid, Sulfat, Phosphat und Carbonat, und (b) Gewinnen von gereinigtem Hydrazinhydrat, enthaltend nicht mehr als 300 ppm gesamten organischen Kohlenstoff, aus der konzentrierten Lösung der Stufe (a), durch Abdestillieren von gereinigtem Hydrazinhydrat.

2. Verfahren nach Anspruch 1, wobei die wäßrige Lösung von unreinem Hydrazinhydrat erhalten worden ist durch Hydrolyse von Ketazin.

3. Verfahren nach Anspruch 2, wobei das Ketazin erhalten worden ist durch Oxidation von Ammoniak mit einem Oxidationsmittel in Gegenwart eines Ketons.

4. Verfahren nach Anspruch 2, wobei die wäßrige Lösung von unreinem Hydrazinhydrat erhalten worden ist durch eine Vorreinigung einer wäßrigen Lösung von stärker verunreinigtem Hydrazinhydrat durch Destillation.

5. Verfahren nach einem der vorangehenden Ansprüche, wobei das Chlorid Lithiumchlorid, Natriumchlorid, Kaliumchlorid, Magnesiumchlorid, Calciumchlorid, Bariumchlorid, Strontiumchlorid, Ammoniumchlorid oder Hydraziniummonochlorid ist.

6. Verfahren nach einem der Ansprüche 1 bis 4, wobei das Sulfat Natriumsulfat, Kaliumsulfat, Magnesiumsulfat, Ammoniumsulfat oder Dihydraziniumsulfat ist.

7. Verfahren nach einem der Ansprüche 1 bis 4, wobei das Phosphat Natriumphosphat, Kaliumphosphat oder Hydraziniumphosphat ist.

8. Verfahren nach einem der Ansprüche 1 bis 4, wobei das Carbonat Natriumcarbonat oder Kaliumcarbonat ist.

9. Verfahren nach einem der vorangehenden Ansprüche, wobei eine Lösung des Salzes in einem oberen Bereich einer Destillationssäule und eine wäßrige Lösung von unreinem Hydrazinhydrat in einem tieferen Bereich als die Lösung des Salzes eingespeist wird.

10. Verfahren nach Anspruch 9, wobei die Lösung des Salzes eine wäßrige Lösung ist.

11. Verfahren nach einem der vorangehenden Ansprüche, wobei eine wäßrige Lösung des Salzes in einen Bereich einer Destillationskolonne eingespeist wird, an dem die Konzentration an Hydrazinhydrat nicht mehr als 35% beträgt.

12. Verfahren nach einem der vorangehenden Ansprüche, wobei die Salzkonzentration in dem Bodenprodukt nicht weniger als 10% beträgt.

13. Verfahren nach einem der vorangehenden Ansprüche, wobei das Bodenprodukt, das bei der Trennstufe (b) erhalten worden ist, wieder in der Konzentrationsstufe (a) verwendet wird.

# FIG. 1